# EUROPEAN PATENT APPLICATION

(11) **EP 1 955 751 A1**
(43) Date of publication of application: **13.08.2008**
(21) Application number: 05805271.3
(22) Date of filing: 25.10.2005
(51) Int. Cl.: B01D 39/20

(54) **HONEYCOMB FILTER**

(71) Applicant: NGK INSULATORS, LTD., Nagoya-shi, Aichi 467-8530 (JP)
(72) Inventor: OKUMURA, Jun, Nagoya-shi, Aicchi 467-8530 (JP)
(74) Representative: Paget, Hugh Charles Edward
(86) International application number: PCT/JP2005/019618
(87) International publication number: WO 2007/049338

(57) **Abstract**

A honeycomb filter according to the present invention is composed of multiple segments each having a large number of through holes, which are separated from each other by porous bulkheads as running through in an axis direction of the segment, the segments bonded with each other by a bonding material. In the honeycomb filter, a heat capacity of the segments arranged in the peripheral portion is higher than that of the segments arranged in the center portion.

## Description

### BACKGROUND OF THE INVENTION

### 1. Field of the Invention

The present invention relates to a honeycomb filter composed of multiple segments bonded together, and, in particular, relates to a honeycomb filter in which cracks are prevented from occurring during heat treatment in its production process.

### 2. Description of the Related Art

A diesel particulate filter (DPF) is one type of honeycomb filters. Having a function of capturing and removing particulates contained in exhaust gas discharged from a diesel engine and the like, DPF is built into an exhaust system of a diesel engine. Such a honeycomb filter is composed of multiple porous segments made of silicon carbide and the like bonded with each other by a bonding material, and is shaped so as to have a predetermined shape, such as a circular cross section, the outer surface thereof is covered with a coating material to obtain a honeycomb filter.

Each of the segments includes a large number of through holes, which are separated by porous bulkheads as running through the segment in an axis direction thereof. Among the through holes adjacent to each other, their ends are alternately sealed. In other words, while a first through hole has an open end located in a first side and a sealed end located in the other side, other through holes adjacent to the first through hole each have a sealed end in the first side and an open end in the other side.

In such a configuration, exhaust gas flowing into the open ends of the through holes in the segments goes through the porous bulkheads and flows out from different through holes. When the exhaust gas goes through the bulkheads, particulates contained in the exhaust gas are captured by the bulkheads. Thus, the exhaust gas can be purified.

A honeycomb filter having such a configuration can be prepared in the following production process. Plastic clay is prepared by mixing a ceramic material such as silicon carbide and cordierite, with an organic binder, a surfactant, water, and the like. The plastic clay thus obtained is molded by extrusion into a honeycomb shape having a large number of through holes separated by bulkheads, dried, heated for degreasing, and then sintered to obtain a segment.

After the above-described sealing is performed on the segment thus obtained, multiple segments are assembled together by application of a bonding material on the outer surface of each of the multiple segments to prepare a segment composite. The segment composite thus obtained is shaped by cutting, covered on the outer surface with a coating material, and then heated for drying to obtain a honeycomb filter having a predetermined three-dimensional shape.

During the honeycomb filter production described above, there is a problem of the generation of cracks in the honeycomb filter. The cracks especially tend to be generated during heat treatment performed for catalyst baking and the like. In particular, the cracks are generated frequently at an interface of the segments (in the bonding material) due to a rapid temperature drop after heat treatment performed for catalyst baking and the like. The inventor of the present invention has conducted investigation on cracking, and revealed the following facts.

In a temperature distribution of the honeycomb filter during temperature drop after heat treatment, the temperature is lowest in the periphery, but sharply increases towards the center to reach the highest at the center. When the temperature of the honeycomb filter having such a temperature distribution is lowered in a short period of time, the temperature on the surface is rapidly lowered, and thereby a large temperature gradient is generated in the periphery portion, resulting in the occurrence of large thermal stress. Due to such thermal stress, cracks are generated in the bonding material, and thereby the bonding strength among segments becomes weak. In an extreme case, the segments are detached from each other, resulting in destruction of the honeycomb filter.

For this reason, the generation of cracks can be prevented if the temperature of the honeycomb filter is lowered slowly by taking longer time instead of the application of forcible cooling to the honeycomb filter, such as blowing the honeycomb filter with cold air thereto. In such a case, however, a sufficiently-long time is required for lowering the temperature of a honeycomb filter during the production; thus, there arises not only a problem that the production requires longer time but also a problem that production efficiency is decreased.

### SUMMARY OF THE INVENTION

Having been conducted in view of the problem described above, the present invention aims to provide a honeycomb filter having a configuration in which the generation of cracks due to heat treatment and the like can be prevented during the production process. In the production of the honeycomb filter having such a configuration, it is not necessary to take longer time for lowering of the temperature; thus, the honeycomb filter can be efficiently produced.

In order to achieve the above object, a honeycomb filter according to a first aspect of the present invention is composed of multiple segments, each of which has a large number of through holes, bonded with each other by a bonding material. In each of the segments, the through holes are separated from each other by porous bulkheads as running through in an axis direction of the segment. The gist of the honeycomb filter is that a heat capacity of the segments arranged in a peripheral portion of the honeycomb is higher than that of the segments arranged in a center portion of the honeycomb.

A honeycomb filter according to a second aspect of the present invention is composed of multiple segments, each of which has a large number of through holes, bonded with each other by a bonding material. In each of the segments, the through holes are separated by porous bulkheads as running through in an axis direction of the segment. The gist of the honeycomb filter is that a mean bulk density of the segments arranged in the peripheral portion of the honeycomb is higher than that of the segments arranged in the center portion of the honeycomb.

A honeycomb filter according to a third aspect of the present invention is composed of multiple segments, each of which has a large number of through holes, bonded together by a bonding material. In each of the segments, the through holes are separated by porous bulkheads as running through in an axis direction of the segment. The gist of the honeycomb filter is that a mean cell density of the segments arranged in the peripheral portion of the honeycomb is higher than that of the segments arranged in the center portion of the honeycomb.

A honeycomb filter according to a third aspect of the present invention is composed of multiple segments, each of which has a large number of through holes, bonded together by a bonding material. In each of the segments, the through holes are separated by porous bulkheads as running through in an axis direction of the segment. The gist of the honeycomb filter is that a mean bulkhead thickness of the segments arranged in the peripheral part of the honeycomb is higher than that of the segments arranged in the center part of the honeycomb.

The honeycomb filters according to the first to fourth aspects of the present invention may have a catalyst supported thereon.

### BRIEF DESCRIPTION OF THE DRAWINGS

FIG. 1 is a perspective view of a honeycomb filter of an embodiment of the present invention.
FIG. 2 is a perspective view of a segment.
FIG. 3 is a cross-sectional view along the line A-A of the segment shown in FIG. 2.
FIG. 4 is an end view illustrating an example of arrangement of segments of a honeycomb filter having a perfectly circular end surface.
FIG. 5 is an end view illustrating another example of arrangement of segments of a honeycomb filter having a perfectly circular end surface.
FIG. 6 is an end view illustrating an example of arrangement of segments of a honeycomb filter having a non-perfectly circular end surface.
FIG. 7 is an end view illustrating another example of arrangement of segments of a honeycomb filter having a non-perfectly circular end surface.
FIG. 8 is a characteristics diagram showing the generation of cracks due to cooling of the honeycomb filter having a perfectly circular end surface.

### DESCRIPTION OF THE PREFERRED EMBODIMENT

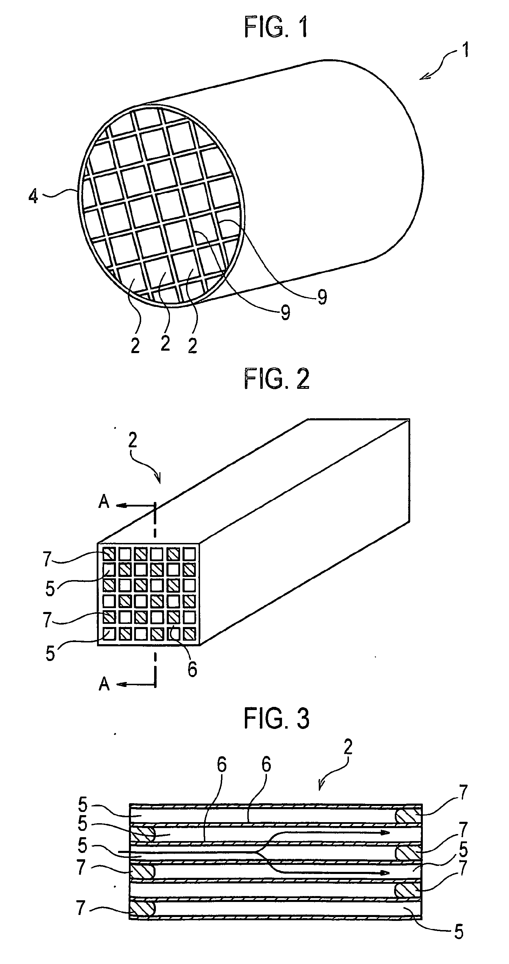

FIGs. 1 and 2 are perspective views of a honeycomb filter 1 to which an embodiment of the present invention is applied. The honeycomb filter 1 is composed of multiple segments 2 bonded with each other by use of a bonding material 9. After the segments 2 are bonded together by the bonding material 9, the segments 2 are shaped by cutting and covered on the outer surface thereof with a coating material 4.

By arranging the honeycomb filter 1 thus obtained in a flow path of exhaust gas in a diesel engine to be used as DPF, it is possible to capture particulates, such as soot, discharged from the diesel engine.

Each of the segments 2 has a large number of through holes 5 (cells) separated from each other by porous bulkheads 6 as shown in FIGs. 2 and 3. The through holes 5 each run through in the respective segments 2 in an axis direction thereof. Among the through holes 5 adjacent to each other, their ends are alternately sealed with a filling material 7. To be more specific, a first through hole 5 has a left end being open and a right end having been sealed with the filling material 7, while other through holes 5 adjacent to the first through hole 5 each have a left end having been sealed with the filling material 7 and a right end being open. After sealing the ends of each of the through holes 5 in this way, the end surface of the individual segments 2 shows a checkered pattern as shown in FIG. 2.

When a honeycomb filter composed of the segments 2 thus assembled together is arranged in a flow path of exhaust gas, the exhaust gas flows into left side of the through holes 5 in the segments 2 and moves towards to the right side, as shown by an arrow in FIG. 3. The exhaust gas, which has flown into the through hole 5, passes through bulkheads 6 and flows out from other through holes. Then, as the exhaust gas is passing through the bulkheads 6, particulates, such as soot, contained in the exhaust gas are captured in the bulkheads 6.

It should be noted that the segments 2 illustrated in the drawings each have a square cross section; however, the cross section of the respective segments 2 may be any other shape, such as triangular and hexagonal shapes. Likewise, the cross sectional shape of the individual through holes 5 may be any one of shapes, such as triangular, hexagonal, circular, and elliptical shapes.

It is preferable that a material of the segments 2 be made of a combination of one or more materials selected from the group consisting of: silicon carbide; silicon-silicon carbide-based composite material; silicon nitride; cordierite; mullite; alumina; spinelle; silicon carbide-cordierite-based composite material; silicon-silicon carbide-based composite material; lithium aluminum silicate; aluminum titanate; and Fe-Cr-Al-based metal.

In the production of the honeycomb filter 1, the segments 2 are firstly prepared. In the preparation of the individual segments 2, a material selected from the group above is mixed with: a surfactant; water; a binder, such as methyl cellulose, hydroxypropoxyl cellulose, hydroxyethyl cellulose, carboxymethyl cellulose, and polyvinyl alcohol; and the like to obtain plastic clay. The clay thus obtained is molded by extrusion to obtain a honeycomb shape compact having a large number of through holes, which are separated by bulkheads as running through in an axis direction of the compact. This compact is dried by use of microwave, hot air, or the like, heated for degreasing, and then.sintered to obtain the segment 2.

The filling material 7 used for sealing the ends of the through holes 5 may be a material similar to the material of the segment 2. After masking the through holes 5 not to be sealed, the ends of the segment 2 are immersed into the filling material 7 in a form of slurry so that the open through holes 5 to be sealed can be filled with the filling material 7.

After the preparation of the segment 2 described above, the outer surface of the segment 2 is coated with a bonding material 9 in a form of slurry, multiple segments 2 are assembled together so as to obtain a segment assembly having a predetermined three-dimensional shape, and then the segment assembly is heated and dried while being pressed so that the segments can be firmly bonded with each other. Thus, a composite composed of the multiple segments 2 bonded with each other is prepared. Thereafter, the composite is shaped by cutting, coated on the outer surface with the coating material 4, and then dried by heat. Thus, the honeycomb filter 1 shown in FIG. 1 can be prepared. In this production process, the bonding material 9 and the coating material 4 may be made of the same material.

In the present embodiment, the honeycomb filter 1 may include a catalyst supported therein. A catalyst supported on the honeycomb filter 1 may be at least one kind of the following materials: platinum metals, such as Pt, Pd, and Rh; alkaline earth metal oxides, such as magnesium oxide, calcium oxide, barium oxide, and strontium oxide; and alkaline metal oxides, such as lithium oxide, sodium oxide, and potassium oxide. A catalyst supported on the honeycomb filter 1 may be any of these materials listed above added with metals, such as lanthanum and manganese.

The honeycomb filter 1 is impregnated with a solution of catalyst material by immersion, spraying, or the like, and then subjected to heat treatment to cause the catalyst to be supported on the honeycomb filter 1. The heat treatment is performed at approximately 500°C to 600°C, and the subsequent temperature drop causes the catalyst to be supported on the honeycomb filter 1. Since the particulates can be burned efficiently in the honeycomb filter 1 having a catalyst supported thereon as described above, it is possible to purify exhaust gas more efficiently using the honeycomb filter 1.

It is configured that, in the honeycomb filter 1 prepared as described above, the segments 2 arranged in the peripheral portion have a higher heat capacity than the segments 2 arranged in the center portion.

In the present embodiment, the segments 2 arranged in the center portion are the segments either: including the gravity center of the cross section of the honeycomb filter; being located adjacent to the center of the cross section; or having all the side surfaces being in contact with other segments. In other words, these segments do not constitute the outermost surface of the honeycomb filter. On the other hand, the segments arranged in the peripheral portion are the segments not being located adjacent to the gravity center of the cross section of the honeycomb filter and constituting a part of the outermost surface of the honeycomb filter.

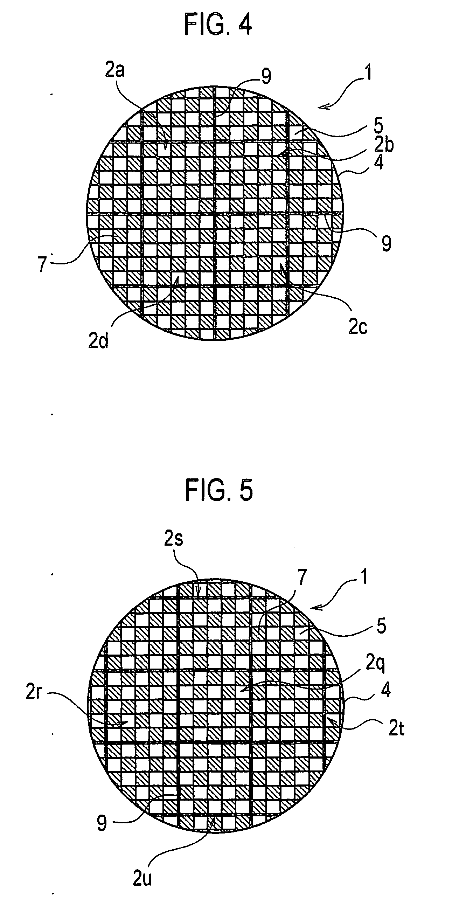

This arrangement of the segments will be described more specifically by referring to FIGs. 4 and 5. FIG. 4 illustrates a honeycomb filter 1 having the gravity center of the cross section thereof on which an intersecting point of the bonding materials 9 is located. FIG. 5 illustrates a honeycomb filter 1 having the gravity center of the cross section thereof on which one of the segments 2 is located.

In FIG. 4, the segments arranged in the center portion in this configuration are segments 2a, 2b, 2c and 2d surrounding the gravity center of the cross section, while the segments arranged in the peripheral portion are all the other segments surrounding these center portion segments. In FIG. 5, the segments arranged in the center portion are a segment 2q, which is located at the center of the cross section, and four segments 2r, 2s, 2t, and 2u all surrounding the segment 2q, while the segments arranged in the peripheral portion are all the segments other than these center portion segments.

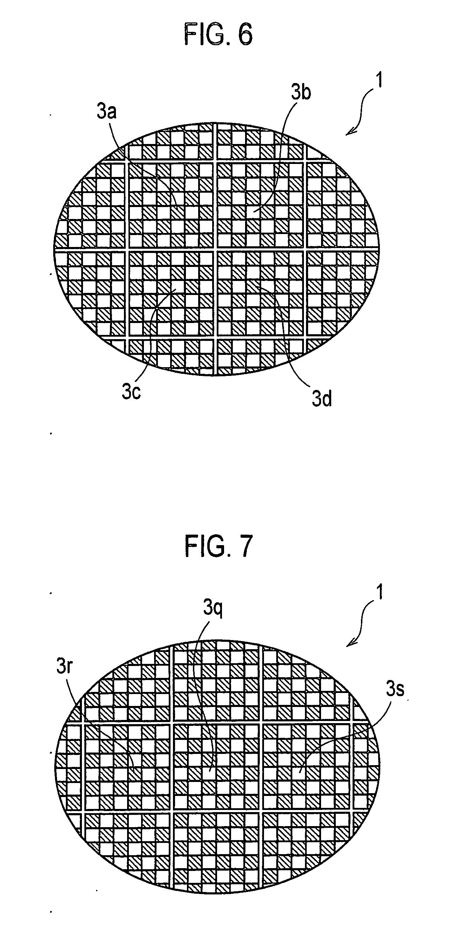

In the present embodiment, it is configured that the segments 2a, 2b, 2c, and2d, and2q, 2r, 2s, 2t, and 2u arranged in the center portion in the honeycomb filters illustrated in FIGs. 4 and 5, respectively, have a heat capacity lower than that of the segments arranged in the peripheral portion in the respective honeycomb filters. Examples of a honeycomb filter having an imperfectly circular cross section will be described in detail by referring to FIGs. 6 and 7. FIG. 6 illustrates a honeycomb filter 1 having the gravity center of the cross section thereof on which an intersecting point of the bonding materials 9 is located. FIG. 7 illustrates a honeycomb filter 1 having the gravity center of the cross section thereof on which one of the segments 2 is located.

In FIG. 6, the segments arranged in the center portion in this configuration are segments 3a, 3b, 3c and 3d surrounding the gravity center of the cross section, while the segments arranged in the peripheral portion are all the other segments surrounding these segments. In FIG. 7, the segments arranged in the center portion in this configuration are a segment 3q, which is located at the center of the cross section, and two segments 3r and 3s located on both sides of the segment 3q, while the segments arranged in the peripheral portion are all the other segments than these segments.

In the present embodiment, it is configured that the segments 3a, 3b, 3c and 3d, and the segments 3q, 3r and 3s arranged in the center portions in the honeycomb filters, each have a lower heat capacity than that of the segments arranged in the peripheral portion in the respective honeycomb filters.

In the honeycomb filter 1 having such configuration described above, the temperature in the segments located in the peripheral portion goes down more gradually during the temperature drop after thermal processing and the like, resulting in a reduction of the difference in a temperature gradient between the segments located in the peripheral portion and those located in the center portion. Accordingly, thermal stress during the temperature drop between the segments in the peripheral portion and those in the center portion becomes smaller, and therefore stress acting on the bonding material 9 disposed between the segments becomes smaller.

By making the stress smaller as described above, it is possible to prevent the generation of cracks in the bonding material 9. Accordingly, not only it is not necessary to take time to lower the temperature, but also no crack is generated even by the application of forced cooling. As a result, the production requires less time, allowing efficient production of the honeycomb filter. Moreover, it is possible to reliably produce the honeycomb filter 1 including a catalyst supported thereon.

As a concrete measure for configuring that the segments 2 arranged in the.peripheral portion have a heat capacity higher than that of the segments 2 arranged in the center portion, a mean bulk density of the segments located in the peripheral portion is configured to be higher than that of the segments located in the center portion. In the present case, bulk density refers to mass per unit volume of the segment 2 including the through holes 5, which is vacancy.

As another measure for configuring that the segments 2 located in the peripheral portion have a heat capacity higher than that of the segments 2 located in the center portion, a mean cell density of the segments located in the peripheral portion is configured to be higher than that of the segments located in the center portion.

As yet another measure for configuring that the segments 2 located in the peripheral portion have a heat capacity higher than that of the segments 2 located in the center portion, a mean bulkhead thickness of the segments located in the peripheral portion is configured to be higher than that of the segments located in the center portion.

By adopting any of these measures, it is possible to reduce a temperature gradient during temperature drop after thermal processing and the like between the segments located in the peripheral portion and in the center portion, and thereby to reduce thermal stress caused during the temperature drop between the segments in the peripheral portion and in the center portion, and to reduce stress acting on the bonding material 9 disposed between the segments. Hence, it is possible to prevent the generation of cracks in the boding material 9.

In addition to the above-described configurations, a material having a large porosity can be employed as the coating material 4 applied to cover the outer surface of the honeycomb filter in the present embodiment. In order to increase the porosity, a colloidal sol, such as colloidal silica and colloidal alumina, metal fiber, and a particulate filler made of inorganic material or organic material are added to the above-described materials of the segment 2.

With the coating material 4 having a large porosity, it is possible to reduce the temperature gradient caused during temperature drop after the coating material 4 is dried by heat, and to lower heat conductivity of the peripheral portion and thereby inhibit heat dissipation. Hence, the generation of cracks in the coating material 4 can be prevented.

As described above, in the honeycomb filter according to the present embodiment, the heat capacity of the segments located in the peripheral portion is higher than that of the segments located in the center portion; this reduces the temperature gradient between the peripheral portion and the center portion during the temperature drop after thermal processing process. Due to the smaller temperature gradient thus achieved, the thermal stress between the peripheral portion and the center portion during the temperature drop becomes smaller, and therefore the stress acting on the bonding material disposed between these segments is reduced. Hence, it is possible to prevent the generation of cracks on the bonding material. In the production of a honeycomb filter having such a configuration, not only it is not necessary to take time to lower the temperature, but also no crack is generated even by the application of forced cooling. As a result, the production requires less time, allowing efficient honeycomb filter production.

Likewise as described above, in the honeycomb filter according to the present embodiment, the mean bulk density of the segments located in the peripheral portion is higher than that of the segments located in the center portion; therefore, the heat capacity of the segments in the peripheral portion is higher than that of the segments in the center portion. This reduces the temperature gradient between the peripheral portion and the center portion during the temperature drop after thermal processing process. In such a configuration, the thermal stress between the peripheral portion and the center portion during the temperature drop becomes smaller, resulting in reducing the stress acting on the bonding material disposed between these portions. Hence, it is possible to prevent the generation of cracks in the bonding material.

Likewise, in the honeycomb filter according to the present embodiment, the mean cell density of the segments located in the peripheral portion is higher than that of the segments located in the center portion; therefore, the heat capacity of the segments in the peripheral portion is higher than that of the segments in the center portion. Accordingly, the temperature gradient between the peripheral portion and the center portion during the temperature drop after thermal processing process is reduced. In such a configuration, the thermal stress between the peripheral portion and the center portion during the temperature drop becomes smaller, resulting in reducing the stress acting on the bonding material disposed between these portions. Hence, it is possible to prevent the generation of cracks in the bonding material.

Likewise, in the honeycomb filter according to the present embodiment, the mean bulkhead thickness of the segments located in the peripheral portion is higher than that of the segments located in the center portion; therefore, the heat capacity of the segments in the peripheral portion is higher than that of the segments in the center portion. Accordingly, the temperature gradient between the peripheral portion and the center portion during the temperature drop after thermal processing process is reduced. In such a configuration, the thermal stress between the peripheral portion and the center portion during the temperature drop becomes smaller, resulting in reducing the stress acting on the bonding material disposed between these portions. Hence, it is possible to prevent the generation of cracks in the bonding material.

In addition, by containing a catalyst, the honeycomb filter according to the present embodiment can efficiently burn particulates; thus, it is possible to purify exhaust gas efficiently by use of the honeycomb filter. Furthermore, the generation of cracks on the honeycomb filter can be prevented even if the honeycomb filter has a catalyst supported thereon and subjected to thermal processing.

### Examples

In the following examples, honeycomb-shaped segments were prepared by molding plastic clay made of a mixture powder containing 80 weight percent SiC and 20 weight percent metal Si, as a base material, which is added with methyl cellulose, hydroxylmethyl cellulose, a surfactant and water. One ends of the respective segments was sealed alternately, while the other ends were left open. After dried, these segments were degreased at 400°C in a nitrogen atmosphere, and then burned at approximately 1,550°C in an inert argon atmosphere. Thus, segments made of silica-bonded silicon carbide having a shape of a square with sides of 35 mm were prepared.

### Example 1

A honeycomb filter was prepared with multiple segments each having a mean micropore diameter of 20 µm and a shape of a square with sides of 35 mm. In the honeycomb filter, it was configured that segments each having a porosity of 60%, a bulkhead thickness of 0.3 mm (12 mil), a cell density of 465K cells/m² (300 cells/inch²), and a bulk density of 0.45 g/cm³ are arranged in the center portion, while segments each having a porosity of 52%, a bulkhead thickness of 0.3 mm (12 mil), a cell density of 465K cells/m² (300 cells/inch²), and a bulk density of 0.53 g/cm³ are arranged in the peripheral portion. These segments were assembled together, as shown in FIG. 5, so that a center of the cross section of one of the segments may be located at the center of the cross section, which is perpendicular to gas flow, of the honeycomb filter. The segment composite thus assembled was shaped by polishing the outer surface thereof so that the resultant honeycomb filter may have a diameter of 144 mm and a total length of 153 mm. Thereafter, the outer surface of the honeycomb filter was coated with a coating material having a porosity of 30% and a density of 1.7 g/cm³.

### Example 2

A honeycomb filter was prepared with multiple segments each having a mean micropore diameter of 20 µm and a shape of a square with sides of 35 mm. In the honeycomb filter, it was configured that segments each having a porosity of 60%, a bulkhead thickness of 0.3 mm (12 mil), a cell density of 465K cells/m² (300 cells/inch²), and a bulk density of 0.45 g/cm³ are arranged in the center portion, while segments each having a porosity of 60%, a bulkhead thickness of 0.4 mm (15 mil), a cell density of 465K cells/m² (300 cells/inch²), and a bulk density of 0.57 g/cm³ are arranged in the peripheral portion. These segments were assembled together, as shown in FIG. 5, so that a center of the cross section of one of the segments may be located at the center of the cross section, which is perpendicular to gas flow, of the honeycomb filter. The segment composite thus assembled was shaped by polishing the outer surface thereof so that the resultant honeycomb filter may have a diameter of 144 mm and a total length of 153 mm. Thereafter, the outer surface of the honeycomb filter was coated with a coating material having a porosity of 30% and a density of 1.7 g/cm³.

### Example 3

A honeycomb filter was prepared with multiple segments each having a mean micropore diameter of 20 µm and a shape of a square with sides of 35 mm. In the honeycomb filter, it was configured that segments each having a porosity of 60%, a bulkhead thickness of 0.3 mm (12 mil), a cell density of 465K cells/m² (350 cells/inch²), and a bulk density of 0.45 g/cm³ are arranged in the center portion, while segments each having a porosity of 60%, a bulkhead thickness of 0.3 mm (12 mil), a cell density of 543K cells/m² (350 cells/inch²), and a bulk density of 0.52 g/cm³ are arranged in the peripheral portion. These segments were assembled together, as shown in FIG. 5, so that a center of the cross section of one of the segments may be located at the center of the cross section, which is perpendicular to gas flow, of the honeycomb filter. The segment composite thus assembled was shaped by polishing the outer surface thereof so that the resultant honeycomb filter may have a diameter of 144 mm and a total length of 153 mm. Thereafter, the outer surface of the honeycomb filter was coated with a coating material having a porosity of 30% and a density of 1.7 g/cm³.

### Comparative Example

A honeycomb filter was prepared by assembling multiple segments each having a mean micropore diameter of 20 µm, a porosity of 60%, a bulkhead thickness of 0.3 mm (12 mil), a cell density of 465K cells/m² (350 cells/inch²), a bulk density of 0.45 g/cm³ and a shape of a square with sides of 35 mm. The segment composite thus assembled was shaped by polishing the outer surface thereof so that the resultant honeycomb filter may have a diameter of 144 mm and a total length of 153 mm. These segments were assembled together, as shown in FIG. 4, so that an intersecting point of the bonding materials may be located at the center of the cross section, which is perpendicular to gas flow, of the honeycomb filter. Thereafter, the outer surface of the honeycomb filter was coated with a coating material having a porosity of 30%.

### Test

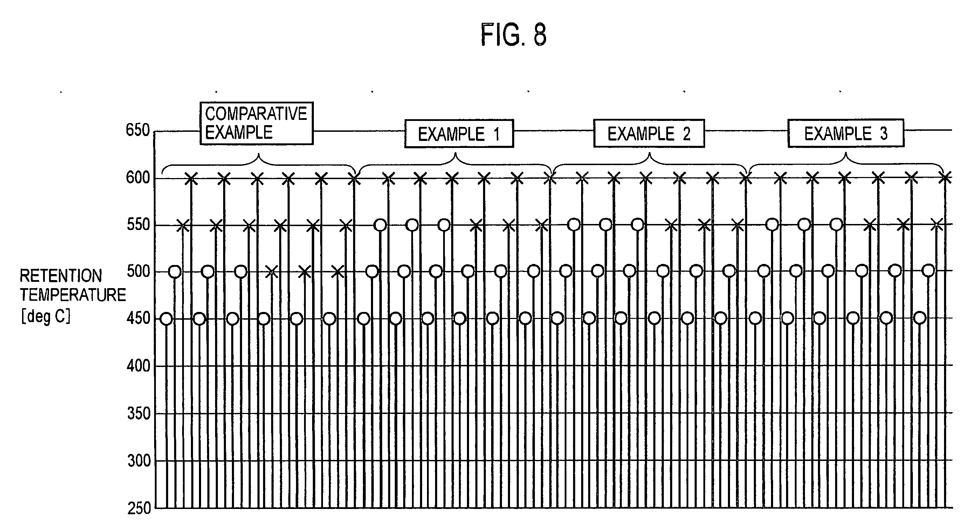

The honeycomb filters prepared in the above Examples 1 to 3 and Comparative Example were subjected to a rapid cooling test in which the temperatures in the center portion and the outermost peripheral portion were constantly monitored. The rapid cooling test was conducted in the following steps: an empty electric furnace is heated to a predetermined set temperature; a sample honeycomb filter is placed in the electric furnace; after closing the cover of the electric furnace, the sample is kept in the electric furnace until the temperature becomes uniform throughout the entire sample; the sample is taken out of the electric furnace to be naturally cooled down on a wire mesh. The surface of the sample after being cooled down was observed to examine whether or not any crack has occurred in the coating material coated on the outer surface and in the bonding material. The observation results are shown in FIG. 8. In FIG. 8, "O (circle)" indicates that no crack was observed both in the coating material and bonding material, while "X (cross)" indicates that the generation of cracks was observed in one of or both of the coating material and the bonding material.

FIG. 8 shows that the threshold set temperature (safe temperature) at which no crack generation was observed was 500°C or lower in Examples 1 to 3, while the threshold set temperature in the Comparative Example was 450°C or lower. Thus, it is indicated that the generation of cracks is less likely to occur in the honeycomb filters prepared in Examples compared to that in Comparative Example.

As described above, according to the first aspect of the present invention, since a heat capacity of the segments located in the peripheral portion is higher than that of the segments located in the center portion, a temperature gradient between the peripheral portion and the center portion during the temperature drop after thermal processing process is reduced. Accordingly, thermal stress between the peripheral portion and the center portion during temperature drop becomes smaller, and thereby stress acting on the bonding material disposed between these segments is reduced; thus, it is possible to prevent the generation of cracks in the bonding material. As a result, the production requires less time, allowing efficient honeycomb filter production.

According to the second aspect of the present invention, since a mean bulk density of the segments located in the peripheral portion is higher than that of the segments located in the center portion, a heat capacity of the segments in the peripheral portion is higher than that of the segments in the center portion.

According to the third aspect of the present invention, since a mean cell density of the segments located in the peripheral portion is higher than that of the segments located in the center portion, a heat capacity of the segments in the peripheral portion is higher than that of the segments in the center portion.

According to the fourth aspect of the present invention, since a mean bulkhead thickness of the segments located in the peripheral portion is higher than that of the segments located in the peripheral portion, a heat capacity of the segments in the outer portion is higher than that of the segments in the center portion.

Having such configurations, in the second to fourth aspects of the present invention, likewise as in the first aspect of the present invention, a temperature gradient between the peripheral portion and the center portion during the temperature drop after thermal processing and the like is reduced, and therefore the thermal stress therebetween becomes smaller. Accordingly, the generation of cracks in the bonding material disposed between these segments can be prevented. Since it is not necessary to take time to lower the temperature, the production time can be shortened, allowing efficient honeycomb filter production.

According to the fifth aspect of the present invention, it is possible not only to conduct efficient exhaust gas purification but also to prevent the generation of cracks in a honeycomb filter during the production.

## Claims

1. A honeycomb filter, comprising
a plurality of segments each having a large number of through holes, which are separated from each other by porous bulkheads as running through in an axis direction of the segment, the segments bonded with each other by a bonding material, wherein
a heat capacity of the segments arranged in a peripheral portion of the honeycomb filter is higher than a heat capacity of the segments arranged in a center portion of the honeycomb filter.

2. A honeycomb filter, comprising
a plurality of segments each having a large number of through holes, which are separated from each other by a porous bulkhead as running through in an axis direction of the segment, the segments bonded with each other by a bonding material, wherein
a mean bulk density of the segments arranged in a peripheral portion of the honeycomb filter is higher than a mean bulk density of the segments arranged in a center portion of the honeycomb filter.

3. A honeycomb filter, comprising
a plurality of segments each having a large number of through holes, which are separated from each other by a porous bulkhead as running through in an axis direction of the segment, the segments bonded with each other by a bonding material, wherein
a mean cell density of the segments arranged in a peripheral portion of the honeycomb filter is higher than a mean cell density of the segments arranged in a center portion of the honeycomb filter.

4. A honeycomb filter, comprising
a plurality of segments each having a large number of through holes, which are separated from each other by a porous bulkhead as running through in an axis direction of the segment, the segments bonded with each other by a bonding material, wherein
a mean bulkhead thickness of the segments arranged in a peripheral portion of the honeycomb filter is higher than a mean bulkhead thickness of the segments arranged in a center portion of the honeycomb filter.

5. The honeycomb filter according to any one of claims 1 to 4, wherein the honeycomb filter has a catalyst supported thereon.
